# EUROPEAN PATENT APPLICATION

(11) **EP 3 613 865 A1**
(43) Date of publication of application: **26.02.2020**
(21) Application number: 17906234.4
(22) Date of filing: 19.04.2017
(51) Int. Cl.: C22C 21/00, C22C 21/02, B32B 15/01, B32B 15/20, F02M 26/29

(54) **ALUMINUM ALLOY MATERIAL HAVING IMPROVED CORROSION RESISTANCE FOR GAS TUBE IN EGR COOLER**

(30) Priority: 17.04.2017 KR 20170049184
(71) Applicant: Korens Co., Ltd., Gyeongsangnam-do 50591 (KR)
(72) Inventor: CHO, Hyung Geun, Busan 48120 (KR)
(74) Representative: Viering, Jentschura & Partner mbB Patent- und Rechtsanwälte
(86) International application number: PCT/KR2017/004195
(87) International publication number: WO 2018/194193

(57) **Abstract**

The present invention relates to an aluminum alloy material for a gas tube included in an exhaust gas recirculation (EGR) system, and more specifically, comprising: a core material; an outer material cladded onto one surface or two surfaces of the core material; and an intermediate material cladded in between the core material and the outer material to prevent magnesium from the core material diffusing into the outer material, wherein the core material comprises copper (Cu), silicon (Si), iron (Fe), magnesium (Mg), manganese (Mn), titanium (Ti), and aluminum (Al). The aluminum alloy material for the gas tube in the EGR cooler, according to the present invention, provides the advantage of maintaining a long life even under extreme environments due to excellent hardness and corrosion resistance.

## Description

### Technical Field

The present invention relates to an aluminum alloy material for a gas tube included in an exhaust gas recirculation (hereinafter, referred to as "EGR") system. More specifically, the present invention relates to an aluminum alloy material having improved corrosion resistance and strength for a gas tube in an EGR cooler.

### Background Art

An exhaust gas recirculation (EGR) system is a system that circulates some exhaust gas back to an intake system to increase CO₂ concentration in intake air, thereby lowering the temperature in a combustion chamber and thereby reducing NOₓ emission.

The mechanism of NOₓ generation will be described in detail. Air contains about 79% nitrogen, 21% oxygen, and other trace elements. Nitrogen and oxygen do not react at room temperature, but do react and form thermal NOₓ at high temperatures of about 1450°C or above. A diesel engine performs combustion by compression ignition. A compression ratio of a diesel engine is gradually increased due to development in materials of cylinders, and thus the temperature in a combustion chamber is increased. The increase of the temperature in the combustion chamber improves thermodynamic efficiency of the engine, but thermal NOₓ is produced due to the high temperatures. Thermal NOₓ is a major harmful substance destroying the global environment, and causes acid rain, photochemical smog, respiratory diseases, etc.

Principles of the reduction in NOₓ emission by the EGR include: circulating inertia gases (water vapor, carbon dioxide, etc.) to lower the maximum temperature in the combustion chamber; performing the lean burn process to prevent a thermal NOₓ-forming atmosphere; and introducing cooling inertia gas having high specific heat capacity to delay the ignition timing and to lower the local maximum temperature and pressure in the combustion chamber. A study has reported that the NOₓ reduction mechanism by the EGR in diesel engines is caused by the reduction of oxygen concentration, unlike gasoline engines. On the contrary, a study has reported that the NOₓ reduction mechanism by the EGR in diesel engines is caused by the decrease of flame temperature. At present, no conclusion has been made to decide which is right, but it has recently been reported that the oxygen concentration and the flame temperature contribute to the NOₓ reduction with the same extent.

Regulations on the exhaust gas of diesel engines have become strict. Accordingly, in order to reduce NOₓ without an increase in fuel consumption and particulate matter (PM), an EGR device is equipped with an EGR cooler using an engine coolant, thereby realizing great effect in reduction in NOₓ reduction with low cost.

In this case, the EGR cooler has the following requirements: being made of a heat-resistant material to cool the exhaust gas temperature of about 700°C to 150°C - 200°C; being compact to install inside vehicles; having minimum pressure drop to supply an appropriate amount of EGR; being made of a corrosion resistant material because the exhaust gas condenses into condensate containing sulfuric acid in a heat-exchange process due to sulfur content in fuel; having a predetermined mechanical strength to endure a mechanical load caused by pulsation of the exhaust gas; and being provided with means to prevent fouling that may be caused by PM of the exhaust gas, or the like, blocking the inside of a passage.

Hereinbelow, an EGR cooler according to the related art will be described in detail with reference to the accompanying drawings.

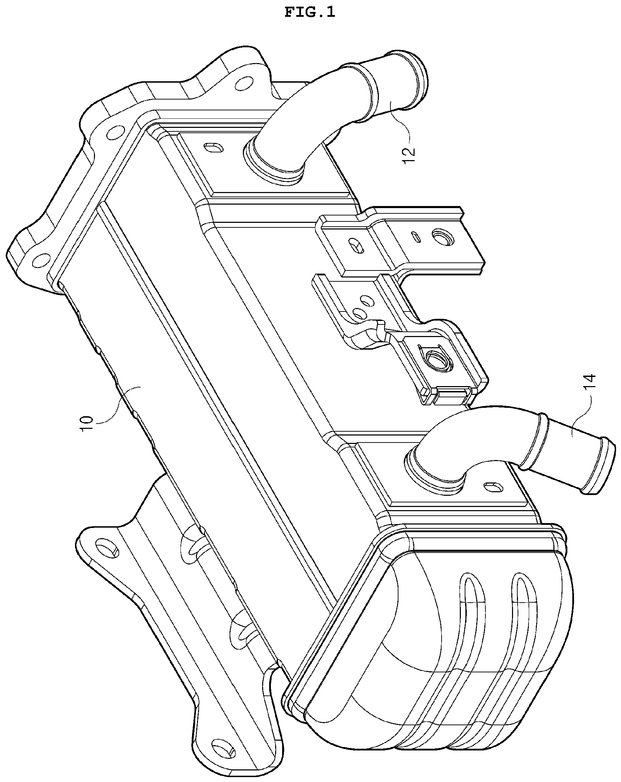

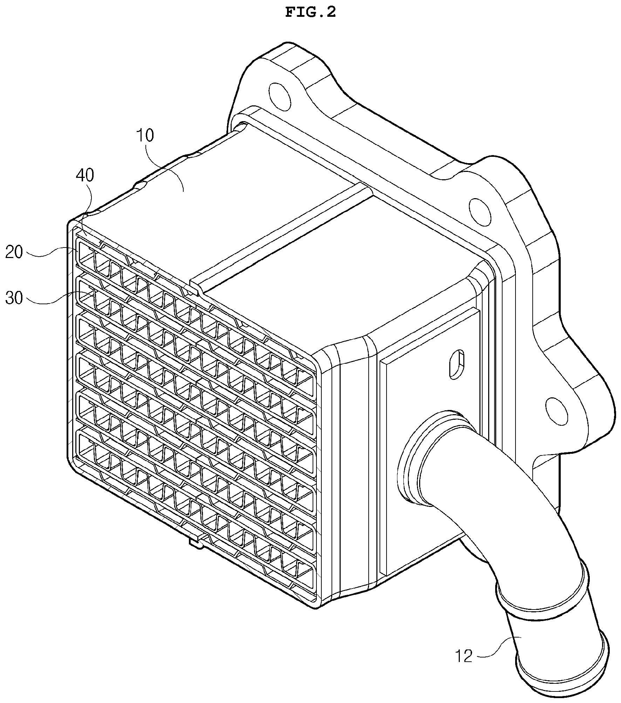

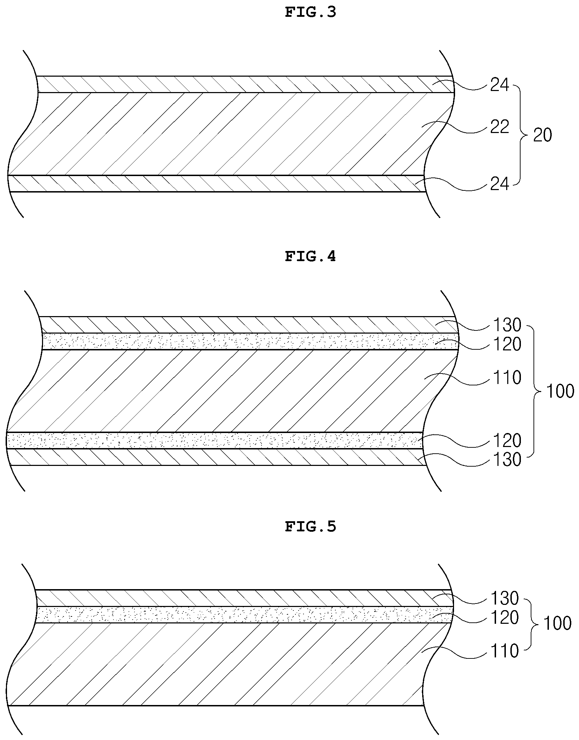

FIG. 1 is a perspective view illustrating the EGR cooler according to the related art; FIG. 2 is a cross-sectional perspective view illustrating the EGR cooler according to the related art; and FIG. 3 is a cross-sectional view illustrating an aluminum alloy material for a gas tube in the EGR cooler according to the related art.

The EGR cooler generally includes basic components including: a body cell 10 having a coolant inlet pipe 12 and a coolant outlet pipe 14 through which a coolant flows in and out; and multiple gas tubes 20 provided inside the body cell 10 and through which an exhaust gas flows. A space is provided between the multiple gas tubes 20. The body cell 10 and the gas tubes 20 are configured to be spaced apart from each other by a predetermined distance so that the coolant flows between the body cell 10 and the gas tubes 20.

As illustrated in FIG. 2, each of the gas tubes 20 is formed to have a flat surface and a rectangular cross section. In addition, as illustrated in FIG. 3, the gas tubes 20 are made of a material including a core material 22 which is aluminum alloy and outer materials 24 cladded onto opposite surfaces of the core material. A3XXX series aluminum alloys, in particular A3003, are widely used as the core material 22, and A4XXX series aluminum alloys, in particular A4045, are widely used as the outer material 24.

A3003 constituting the core material 22 is excellent in strength and corrosion resistance compared with other series, but tends to be easily corroded by condensate when used as a material of a gas tube for the EGR cooler. In other words, when the exhaust gas containing high concentration of water vapor flows into the gas tubes 20 in use of the EGR cooler, acidic condensate is generated inside the gas tubes 20 when the temperature decreases. Accordingly, the materials of the gas tubes 20 are easily corroded due to negative ions in the condensate.

### Disclosure

### Technical Problem

Accordingly, the present invention has been made keeping in mind the above problems occurring in the related art, and an objective of the present invention is to provide an aluminum alloy material for a gas tube in an EGR cooler, the aluminum alloy material having excellent strength and improved corrosion resistance, thereby extending the life span of the gas tube even under extreme conditions.

### Technical Solution

In order to accomplish the above objective, the present invention provides an aluminum alloy material for a gas tube in an EGR cooler, the aluminum alloy material including: a core material; an outer material cladded onto a single surface or opposite surfaces of the core material; and an intermediate material cladded between the core material and the outer material to prevent magnesium from diffusing into the outer material from the core material, wherein the core material includes copper (Cu), silicon (Si), iron (Fe), magnesium (Mg), manganese (Mn), titanium (Ti), and aluminum (Al) .

The core material may include 0.4 wt.% - 0.6 wt.% of copper (Cu), 0.6 wt.% - 0.8 wt.% of silicon (Si), 0.4 wt.% - 0.6 wt.% of iron (Fe), 0.3 wt.% - 0.4 wt.% of magnesium (Mg), 0.4 wt.% - 1.1 wt.% of manganese (Mn), 0.1 wt.% - 0.2 wt.% of titanium (Ti), and a remainder of aluminum (Al).

The intermediate material may be A3003 aluminum alloy or A0140 aluminum alloy.

The outer material may be A4045 aluminum alloy.

The aluminum alloy material may have a total thickness of 0.7 mm - 2.0 mm, the outer material occupies 3% - 8% of the total thickness of the aluminum alloy material, and the intermediate material occupies 3% - 8% of the total thickness of the aluminum alloy material.

### Advantageous Effects

An aluminum alloy material for a gas tube in an EGR cooler according to the present invention is excellent in strength and corrosion resistance, thereby extending life span of the gas tube even under extreme conditions.

Thus, replacement cycle of the gas tube of the EGR cooler is extended. Accordingly, maintenance cost of the EGR cooler is saved, and there is no performance degradation of the EGR cooler which may be caused by corrosion, thereby reducing emissions and improving fuel efficiency.

### Description of Drawings

FIG. 1 is a perspective view illustrating an EGR cooler according to the related art;
FIG. 2 is a cross-sectional perspective view illustrating the EGR cooler according to the related art;
FIG. 3 is a cross-sectional view illustrating a material for a gas tube in the EGR cooler according to the related art;
FIG. 4 is a cross-sectional view illustrating an aluminum alloy material for a gas tube in an EGR cooler according to a first embodiment of the present invention;
FIG. 5 is a cross-sectional view illustrating an aluminum alloy material for a gas tube in an EGR cooler according to a second embodiment of the present invention;
FIG. 6 is a photograph illustrating an apparatus for testing for corrosion resistance in Test Example 1 according to the present invention;
FIG. 7 is a graph illustrating a condensate circulation cycle obtained in Test Example 1 according to the present invention;
FIG. 8 shows photographs respectively illustrating a cross section of Comparative Example 1 before and after carrying out Test Example 1 according to the present invention; and
FIG. 9 shows photographs respectively illustrating a cross section of Example 1 before and after carrying out Test Example 1 according to the present invention.

### Mode for Invention

Hereinbelow, a material for a gas tube in an EGR cooler according to embodiments of the present invention will be described in detail with reference to the accompanying drawings.

The present invention relates to an aluminum alloy material 100 for a gas tube equipped in an EGR cooler allowing heat-exchange between a high-temperature exhaust gas and a low-temperature coolant to cool the exhaust gas and transferring the exhaust gas to an exhaust gas recirculation (EGR) system.

As illustrated in FIG. 4, the aluminum alloy material according to the first embodiment of the present invention includes: a core material 110; outer materials 130 cladded onto opposite surfaces of the core material 110; and intermediate materials 120 each cladded between the core material 110 and the outer materials 130 to prevent magnesium from diffusing into the outer materials 130 from the core material 110. The core material 110 includes copper (Cu), silicon (Si), iron (Fe), magnesium (Mg), manganese (Mn), titanium (Ti), and aluminum (Al).

The core material 110 is to maintain main physical properties of a clad material and to impart high strength and high corrosion resistance, and includes copper (Cu), silicon (Si), iron (Fe), magnesium (Mg), manganese (Mn), titanium (Ti), and aluminum (Al). A composition ratio here is preferably 0.4 wt.% - 0.6 wt.% of copper (Cu), 0.6 wt.% - 0.8 wt.% of silicon (Si), 0.4 wt.% - 0.6 wt.% of iron (Fe), 0.3 wt. % - 0.4 wt. % of magnesium (Mg), 0.4 wt. % - 1.1 wt. % of manganese (Mn), 0.1 wt.% - 0.2 wt.% of titanium (Ti), and the remainder of aluminum (Al).

That is, the core material 110 according to the present invention is obtained by improving a composition of the conventional A3003 aluminum alloy. As shown in Table 1 below, the core material 110 is increased in the copper content compared with the basic composition of A3003 aluminum alloy to reinforce the strength and corrosion resistance. In addition, magnesium is added to increase the strength, and titanium is added to induce uniform corrosion.

### Table 1

**[Table 1]**

| Composition of the core material | | | | | | | | |
|---|---|---|---|---|---|---|---|---|
| Category | Composition (wt.%) | | | | | | | |
| | Cu | Si | Fe | Zn | Mg | Mn | Ti | Al |
| A3003 | 0.05 | 0.6 | 0.7 | 0.1 | - | 0.1 | - | Rem. |
| | - | | | | | - | | |
| | 0.2 | | | | | 1.5 | | |
| Core material of the present invention | 0.4 | 0.6 | 0.4 | - | 0.3 | 0.4 | 0.1 | Rem. |
| | - | - | - | | - | - | - | |
| | 0.6 | 0.8 | 0.6 | | 0.4 | 1.1 | 0.2 | |

In more detail, as can be seen in Table 1, the copper content is increased from 0.05 wt.% - 0.2 wt.% to 0.4 wt.% - 0.6 wt.% such that Al₂Cu is precipitated, leading to improving of the strength, and corrosion potential is increased, leading to improving of the corrosion resistance. In addition, 0.3 wt.% - 0.4 wt.% of magnesium is added such that Mg₂Si is precipitated, thereby improving the strength due to age hardening. In addition, 0.1 wt.% - 0.2 wt.% of titanium is added such that the behavior of corrosion is changed, which means that uniform corrosion is induced rather than local corrosion. Furthermore, the iron content is lowered to 0.4 wt.% - 0.6 wt.% according to the present invention because the higher the iron content, the lower the corrosion resistance, and zinc is not contained.

That is, compared with the conventional A3003 aluminum alloy, the core material 110 according to the present invention contains magnesium and titanium, the higher copper content, the lower iron content, and no zinc, thereby remarkably improving the strength and corrosion resistance.

The outer materials 130 cladded on the opposite surfaces of the core material 110 are brazing filler materials provided for brazing. The outer materials 130 may be A4045 aluminum alloy which is the same as the conventional gas tube material, and may be various aluminum alloys disclosed in the related art.

Table 2 below shows a composition of A4045 aluminum alloy.

### Table 2

**[Table 2]**

| Composition of A4045 aluminum alloy | | | | | | | | |
|---|---|---|---|---|---|---|---|---|
| Category | Composition (wt.%) | | | | | | | |
| | Si | Fe | Cu | Mn | Mg | Zn | Ti | Al |
| A4045 | 9.0 - 11.0 | 0.8 | 0.30 | 0.05 | 0.05 | 0.10 | 0.20 | Rem. |

According to the present invention, the intermediate materials 120 are provided between the core material 110 and the outer materials 130. The intermediate materials 120 are to prevent magnesium from diffusing from the core material 110. Magnesium contained to improve the strength of the core material 110 may diffuse into the outer materials 130 so that some portions may be unbonded in the brazing process, thereby degrading bonding of the material 100. Therefore, when the intermediate materials 120 preventing diffusion of magnesium are cladded between the core material 110 and the outer materials 130, magnesium is prevented from diffusing into the outer materials 130 from the core material 110 and thus unbonding is prevented.

Here, aluminum alloy containing no magnesium, most preferably, A3003 aluminum alloy, may be used as the intermediate materials 120. Since A3003 aluminum alloy has been described in Table 1 above, the description thereof will be omitted here. Alternatively, A0140 aluminum alloy, which contains a small amount of magnesium but prevents magnesium from diffusing from the core material 110, may be used as the intermediate materials 120. A composition of A0140 aluminum alloy is shown in Table 3 below. However, A3003 aluminum alloy is preferably to be used to effectively prevent diffusion of magnesium.

### Table 3

**[Table 3]**

| Composition of A0140 aluminum alloy | | | | | | | | |
|---|---|---|---|---|---|---|---|---|
| Category | Composition (wt.%) | | | | | | | |
| | Si | Fe | Cu | Mn | Mg | Zn | Ti | Al |
| A0140 | 0.34 - 0.5 | 0.30 | 0.05 | 0.10 | 0.05 | 0.10 | 0.05 | Rem. |

As described above, since the aluminum alloy material 100 for a gas tube is composed of the core material 110 having improved corrosion resistance and strength, the intermediate materials 120 preventing magnesium from diffusing from the core material 110, and the outer materials 130 provided for brazing, the aluminum alloy material 100 has excellent strength and corrosion resistance but also has excellent bonding so that the aluminum alloy material 100 is suitable for a gas tube in an EGR cooler.

In the present invention, a process of manufacturing a gas tube using the material 100 is performed by well-known methods in the art such as cladding, roll forming, bonding, and the like, and thus the detailed description thereof will be omitted.

The aluminum alloy material 100 is preferably 0.7 mm - 2.0 mm thick. This is because when the aluminum alloy material 100 is too thin, the heat exchange efficiency is increased but the replacement cycle of a gas tube is shortened which is not good in terms of a cost aspect, and when the thickness is too thick, the heat exchange efficiency is reduced. The thickness of the outer materials 130 is preferably 3% - 8% of the total thickness of the material, and the same applies to the intermediate materials 120. This is because when the thickness of the outer materials 130 or the intermediate materials 120 occupies less than 3% of the total thickness, the materials cannot function properly, and when the thickness of the outer materials 130 or the intermediate materials 120 occupies over 8% of the total thickness, it is not good in terms of cost due to the thickness being more than necessary, and the corrosion resistance and strength are adversely affected. Here, the thickness of the outer materials 130 is sum of the thickness of each of the outer materials 130 provided on the opposite sides, and the thickness of the intermediate materials 120 is sum of the thickness of each of the intermediate materials 120 provided on the opposite sides. It is preferable to clad the outer materials 130 to the same thickness on each side, and the same applies to the intermediate materials 120 in order to improve the corrosion resistance.

As illustrated in FIG. 5, an aluminum alloy material according to a second embodiment of the present invention includes: a core material 110; an outer material 130 cladded onto a single surface of the core material 110; and an intermediate material 120 cladded between the core material 110 and the outer material 130 to prevent magnesium from diffusing into the outer material 130 from the core material 110. The core material 110 includes copper (Cu), silicon (Si), iron (Fe), magnesium (Mg), manganese (Mn), titanium (Ti), and aluminum (Al). That is, the intermediate material 120 and the outer material 130 are cladded only onto a single surface of the core material 110. The aluminum alloy material 100 having the structure also has remarkably improved corrosion resistance due to a composition of the core material 110.

The material 100 here is roll-formed to construct a tube such that the core material 110 is positioned at the inner side of a gas tube, and the outer material 130 is positioned at the outer side of the gas tube.

Here, the core material 110, the intermediate material 120, and the outer material 130 have been described above, the description thereof will be omitted.

Hereinbelow, the present invention will be described more specifically with reference to Example.

### (Example 1)

Aluminum alloy was prepared in the composition shown in Table 4 below.

A core material composed of the aluminum alloy was prepared, and intermediate materials of A3003 aluminum alloy and outer materials of A4045 aluminum alloy were clad onto opposite sides of the core material. Here, the core material was 1.5 mm thick, and the intermediate materials and the outer materials were each 0.075 mm thick . Specifically, the intermediate material on one side was 0.0375 mm thick, the intermediate material on the opposite side was 0.0375 mm thick, the outer material on the one side was 0.0375 mm thick, and the outer material on the opposite side was 0.0375 mm thick. The materials were roll-formed to prepare a gas tube.

### Table 4

**[Table 4]**

| Composition of aluminum alloy according to Example 1 | | | | | | |
|---|---|---|---|---|---|---|
| Composition (wt.%) | | | | | | |
| Cu | Si | Fe | Mg | Mn | Ti | Al |
| 0.5 | 0.7 | 0.5 | 0.3 | 0.7 | 0.15 | Rem. |

### (Comparative Example 1)

Outer materials of A4045 aluminum alloy were cladded onto opposite surfaces of a core material of A3003 aluminum alloy. Here, the core material was 1.5 mm thick, and each of the outer materials was 0.0375 mm thick. The materials were roll-formed to prepare a gas tube.

### (Test Example 1)

A corrosion resistance test for Example 1 and Comparative Example 1 was carried out.

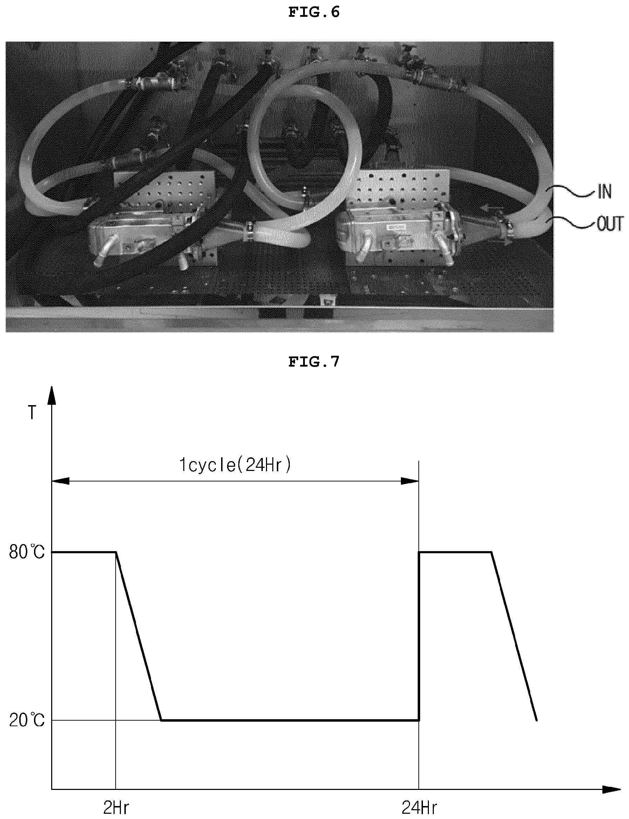

In the corrosion resistance test, condensate having a composition as shown in Table 5 was prepared, and the condensate was circulated through specimens of Example 1 and Comparative Example 1 using an apparatus illustrated in FIG. 6. Here, a circulation cycle of the condensate is illustrated in FIG. 7, wherein one cycle includes that the condensate of 80°C was circulated in the specimens of Example 1 and Comparative Example 1 for 2 hours and the specimens were left for 22 hours at room temperature. The test was carried out for one week, wherein the cycle was repeated for five days, and the specimens were left for 48 hours at room temperature.

### Table 5

**[Table 5]**

| Composition of condensate | | | | | | | |
|---|---|---|---|---|---|---|---|
| Temperature | pH | Composition (ppm) | | | | | |
| | | Cl- | NO₃⁻ | SO₄²⁻ | F⁻ | CH3COO⁻ | HCOO⁻ |
| 80°C | 1.85 | 300 | 2,000 | 400 | 200 | 20,000 | 20,000 |

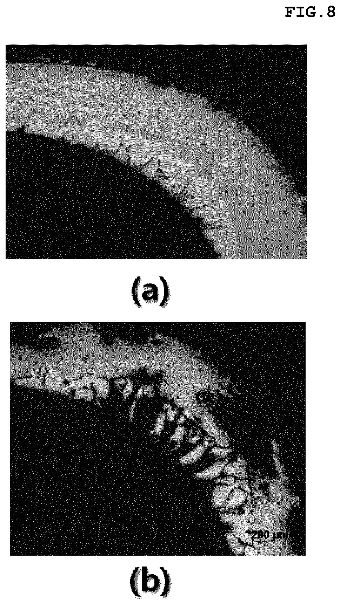

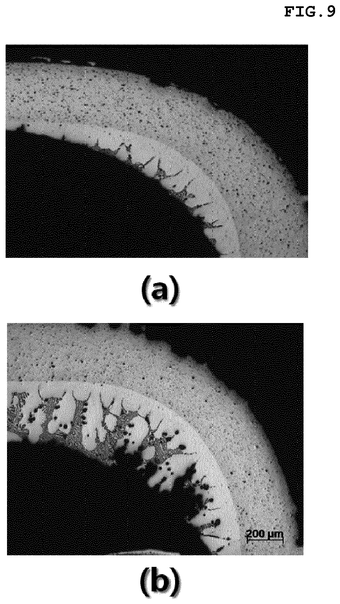

Cross sections of the specimens were observed to confirm corrosion resistance. FIG. 8(a) is a photograph illustrating the cross section of Comparative Example 1 before carrying out the test; FIG. 8(b) is a photograph illustrating the cross section of Comparative Example 1 after carrying out the test; FIG. 9(a) is a photograph illustrating the cross section of Example 1 before carrying out the test; and FIG. 9(b) is a photograph illustrating the cross section of Example 1 after carrying out the test. After the test, corrosion progressed in Comparative Example 1 with a narrow and deep shape, and intergranular corrosion also occurred so that it was confirmed that Comparative Example 1 was vulnerable in the condensate present environment. On the contrary, in Example 1 according to the present invention, the progress of corrosion was remarkably less compared with Comparative Example 1. In addition, the corrosion did not progress with a narrow and deep shape so that it was confirmed that risk of penetration of the materials was remarkably smaller compared with Comparative Example 1.

Therefore, it was confirmed that the aluminum alloy material 100 according to the present invention is suitable for a gas tube in an EGR cooler in terms of corrosion resistance.

Although the present invention has been described with reference to the embodiments, those skilled in the art will appreciate that various modifications, additions and substitutions are possible, without departing from the scope and spirit of the invention as disclosed in the accompanying claims. It is thus well known to those skilled in that art that the present invention is not limited to the embodiments disclosed in the detailed description, and the patent right of the present invention should be defined by the scope and spirit of the invention as disclosed in the accompanying claims. Accordingly, it should be understood that the present invention includes various modifications, additions, and substitutions without departing from the scope and spirit of the invention as disclosed in the accompanying claims.

## Claims

1. An aluminum alloy material for a gas tube in an EGR cooler, the aluminum alloy material comprising:
a core material;
an outer material cladded onto a single surface or opposite surfaces of the core material; and
an intermediate material cladded between the core material and the outer material to prevent magnesium from diffusing into the outer material from the core material,
wherein the core material includes copper (Cu), silicon (Si), iron (Fe), magnesium (Mg), manganese (Mn), titanium (Ti), and aluminum (Al).

2. The aluminum alloy material of claim 1, wherein the core material includes 0.4 wt. % - 0.6 wt. % of copper (Cu), 0.6 wt. % - 0.8 wt. % of silicon (Si), 0.4 wt. % - 0.6 wt. % of iron (Fe), 0.3 wt. % - 0.4 wt. % of magnesium (Mg), 0.4 wt. % - 1.1 wt.% of manganese (Mn), 0.1 wt.% - 0.2 wt.% of titanium (Ti), and a remainder of aluminum (Al).

3. The aluminum alloy material of claim 1, wherein the intermediate material is A3003 aluminum alloy or A0140 aluminum alloy.

4. The aluminum alloy material of claim 1, wherein the outer material is A4045 aluminum alloy.

5. The aluminum alloy material of claim 1, wherein the aluminum alloy material has a total thickness of 0.7 mm - 2.0 mm, the outer material occupies 3% - 8% of the total thickness of the aluminum alloy material, and the intermediate material occupies 3% - 8% of the total thickness of the aluminum alloy material.
